Europäisches Patentamt

European Patent Office

Office européen des brevets

(19)

(11) EP 0 624 866 B1

(12) EUROPÄISCHE PATENTSCHRIFT

(45) Veröffentlichungstag und Bekanntmachung des Hinweises auf die Patenterteilung:
**07.07.1999 Patentblatt 1999/27**

(51) Int Cl.⁶: **G10L 7/04**, G10L 7/06, H04B 1/66

(21) Anmeldenummer: **94107229.0**

(22) Anmeldetag: **09.05.1994**

(54) **Frequenzanalyseverfahren**

Method for frequency analysis

Procédé d'analyse de fréquence

(84) Benannte Vertragsstaaten:
**DE DK FR GB NL PT**

(30) Priorität: **14.05.1993 DE 4316297**

(43) Veröffentlichungstag der Anmeldung:
**17.11.1994 Patentblatt 1994/46**

(73) Patentinhaber: **FRAUNHOFER-GESELLSCHAFT ZUR FÖRDERUNG DER ANGEWANDTEN FORSCHUNG E.V.**
**80636 München (DE)**

(72) Erfinder:
• **Kapust, Rolf, Dipl.-Ing.**
**D-96135 Stegaurach (DE)**
• **Seitzer, Dieter, Prof. Dr.**
**D-91054 Erlangen (DE)**

(74) Vertreter: **Schoppe, Fritz, Dipl.-Ing.**
**Schoppe & Zimmermann**
**Patentanwälte**
**Postfach 71 08 67**
**81458 München (DE)**

(56) Entgegenhaltungen:
**WO-A-90/09064        DE-A- 4 011 577**

• **PROCEEDINGS OF THE AES 11TH INTERNATIONAL CONFERENCE; PORTLAND (USA), 1992 Seiten 191 - 202 R. KAPUST 'A Human Ear Related Objective Measurement Technique yields Audible Error and Error Margin'**
• **JOURNAL OF THE ACOUSTICAL SOCIETY OF AMERICA, Bd.33, 1961, NEW YORK US Seite 248 E. ZWICKER 'Subdivision of the Audible Frequency Range into Critical Bands (Frequenzgruppen)'**
• **AMER. MATH. MONTHLY, Bd.65, 1958 Seiten 34 - 35 G. GOERTZEL 'An Algorithm for the Evaluation of Finite Trigonometric Series'**

**Beschreibung**

Die vorliegende Erfindung betrifft ein Frequenzanalyseverfahren, bei dem aus einem zeitdiskret, in Form von Blöcken von Abtastwerten vorliegenden Eingangssignal mittels einer Fensterfunktion überlappend aufeinanderfolgende Blöcke von Abtastwerten entnommen werden, woraufhin die so mit den Fensterfunktionen bewerteten Blöcke zur Erzeugung eines Satzes von Koeffizienten Fourier-transformiert werden, nach dem Oberbegriff des Patentanspruchs 1.

Es sind hauptsächlich zwei verschiedene Frequenzanalyseverfahren bekannt, mittels derer ein zeitliches, in Form von Abtastwerten vorliegendes Eingangssignal in eine Mehrzahl von Koeffizienten, d. h. in den Spektralbereich transformiert werden kann. Diese Verfahren lassen sich in sogenannte Teilbandverfahren (vgl. beispielsweise DE 40 11 577 A1) und Transformationsverfahren (vgl. beispielsweise US-5142656) klassifizieren, wenngleich Transformations- und Filterbankanalysen mathematisch zunächst eng miteinander verwandt sind.

Für die Audiosignalanalyse und/oder -codierung ist es zweckmäßig und vorteilhaft, die Frequenzanalyse den Eigenschaften des menschlichen Ohres als Schallempfänger anzupassen. Eine wesentliche Erkenntnis der Psychoakustik ist hierbei, daß das Ohr Schallereignisse, die in eine besteimmte Bandbreite, die sogenannte Frequenzgruppenbreite fallen, gemeinsam bewertet. Schallereignisse außerhalb einer solchen Frequenzgruppenbreite werden getrennt wahrgenommen.

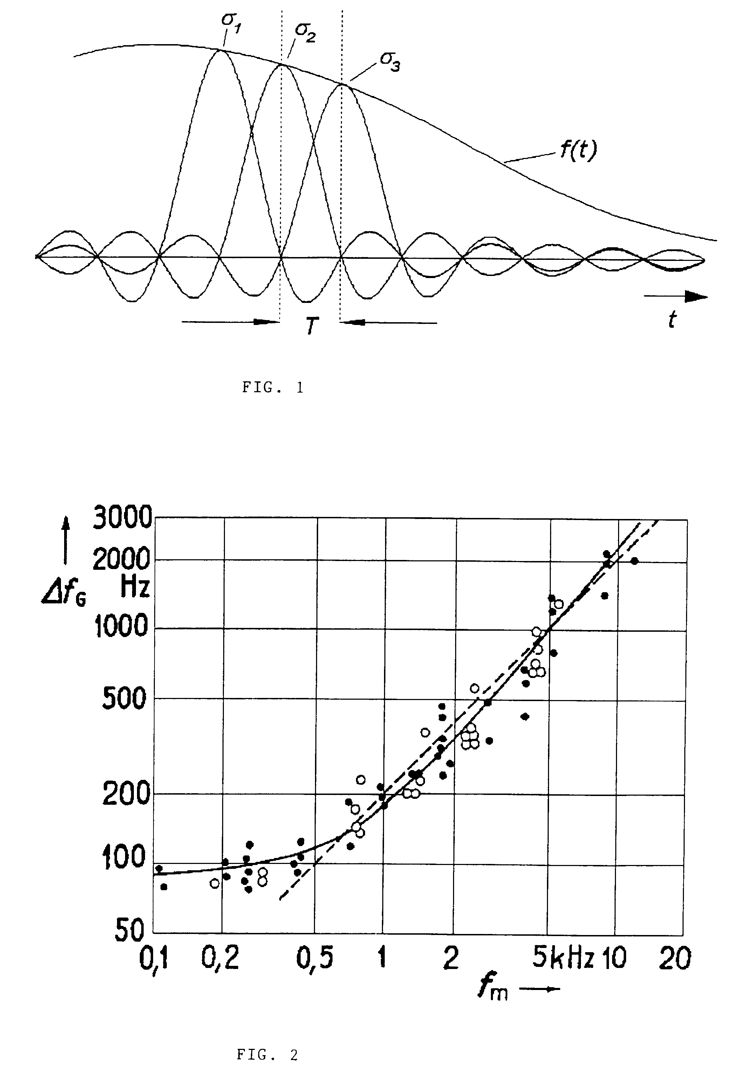

Die Frequenzgruppenbreite ist - im Gegensatz zu rein technischen Frequenzanalysen - nicht konstant; mit zunehmender Mittenfrequenz wird auch ihre Bandbreite größer. Der Zusammenhang zwischen Frequenzgruppenbreite und Mittenfrequenz ist darüberhinaus, wie in Fig. 2 gezeigt, nichtlinear.

Dabei verwenden die sogenannten Teilbandverfahren zur Spektralanalyse Filterbänke, die eine spektrale Zerlegung entsprechend den Frequenzgruppen vornehmen. Üblicherweise verwendet man hierzu Kaskadenanordnungen aus Halbbandfiltern. Durch die fortgesetzte Halbierung des Basisbandes mittels einer derartigen Halbbandfilterkaskade kann nur eine grobe Annäherung an die Aufteilung in Frequenz gruppen erreicht werden.

Die Zeitauflösung von Bandfiltern ist umgekehrt proportional zu ihrer jeweiligen Bandbreite; sie wird also mit zunehmender Bandbreite feiner und ist damit gut den Eigenschaften des Gehörs angepaßt. Halbband-Filterkaskaden erzeugen aber, bedingt durch das Prinzip der fortgesetzen Halbierung des Basisbandes, relativ große Abweichungen der Frequenzaufteilung von der Vorgabe durch die Frequenzgruppenaufteilung, die Zwicker für das Gehör gefunden hat.

FFT-Analysen können zwar bei entsprechend feinem Frequenzraster eine genaue Aufteilung in Frequenzgruppen gewährleisten, die Zeitauflösung ist dann jedoch zu grob und insbesondere konstant für alle Frequenzgruppen, was wiederum auch nicht den Eigenschaften des menschlichen Schallrezeptors entsprechen kann, wie die Wahrnehmbarkeit von Vorechostörungen beweist.

Prinzipiell ist die Zeitauflösung durch die Rekonstruktion einer Impulsfolge mit Hilfe eines idealen Tiefpasses gegeben. Die aus der Impulsantwort eines Filters ablesbare Zeitauflösung wird als "resolution span" bezeichnet. Sie ist in Fig. 1 wiedergegeben.

Wie in Fig. 1 gezeigt ist, ist die Erzeugung der auf $f_g$ bandbegrenzten Funktion f(t) durch Superposition von mit dem jeweiligen Abtastwert bewerteten sinx/x-Funktionen $\sigma_n(t)$ möglich. Die sinx/x-Funktionen (Spaltfunktionen) stellen die Impulsantwort eines idealen Tiefpasses mit der Grenzfrequenz $f_g$ dar. Die Zeitauflösung des idealen Tiefpasses ist T.

Das Prinzip wird für ideale Interpolatoren verwendet. Dazu werden sinx/x-Funktionen mit dem jeweiligen Abtastwert bewertet und um einen Zeitabschnitt T verschoben, der sich aus dem Abstand von Maximum zum ersten Nulldurchgang der sinx/x-Funktion ergibt. Die Superposition aller dieser sinx/x-Funktionen ergibt die interpolierte Zeitfunktion. Der Verlauf der auf diese Weise rekonstruierten kontinuierlichen Zeitfunktion stimmt an den Nulldurchgängen der Spaltfunktionen mit den Abtastwerten exakt überein. Diese Bedingung ist als Interpolationsbedingung bekannt.

Als Zeitauflösung wird eben dieser Abstand von Maximum zum ersten Nulldurchgang bzw. der Abstand der Nulldurchgänge der sinx/x-Funktion bezeichnet. Es ist leicht einzusehen, daß die Zeitauflösung gleich der Abtastperiode ist, wenn als Interpolationsfilter ein Tiefpass mit einer Grenzfrequenz $f_g$ gleich der halben Abtastfrequenz $f_a$, also ein Allpass gewählt wird. Das Produkt aus Bandbreite und Zeitauflösung beträgt in diesem Fall $B \cdot T = f_a \cdot 1/2f_a = 0{,}5$. Bei einer bestimmten Bandbreite kann die damit gegebene Zeitauflösung nicht unterschritten werden. Dies wird in Analogie zu einem ähnlichen, aus der Physik bekannten Sachverhalt als Heisenberg-Grenze bezeichnet. Teilband- und/oder Transformationsverfahren zur spektralen Zerlegung finden sich in fast allen heute bekannten Codern. Beide sind für eine gehörgerechte Repräsentation im Frequenz- und Zeitbereich ungeeignet. Speziell muß ein Meßverfahren, das beanspucht, die Qualität heutiger Codierverfahren beurteilen zu können, sicher bereits hinsichtlich der Frequenzanalyse genauer arbeiten; erst dann ist die Genauigkeit, mit der hierüber die Mithörschwellen bestimmt werden höher, als in den zu beurteilenden Coder-Decoder-Kombinationen.

Die Nachteile herkömmlicher, heute fast ausschließlich angewendeter Verfahren zur gehörrichtigen Frequenzanalyse seien in zusammengefaßter Form verdeutlicht:

- Teilbandverfahren arbeiten zwar an der Heisenberg-Grenze; die Frequenzgruppenbreiten werden jedoch nur grob getroffen.

- Transformationsverfahren sind zwar in der Lage, die Frequenzgruppenbreiten im Prinzip beliebig genau nachzubilden, die Zeitauflösung ist jedoch bei weitem zu grob, darüber hinaus konstant und somit nicht gehöradäquat.

- Hybride Frequenzanalysen nähern sich der geforderten Zeit-/Frequenzauflösung des Gehörs zwar besser, eine exakte Nachbildung ist aber auch hiermit prinzipiell nicht möglich.

Der Erfindung liegt die Aufgabe zugrunde, ein Frequenzanalyseverfahren zu schaffen, das die Eigenschaften des menschlichen Ohres nicht nur im Frequenz- sondern gleichzeitig auch im Zeitbereich nachbildet. Diese Aufgabe wird durch ein Frequenzanalyseverfahren gemäß Anspruch 1 gelöst.

Gemäß der Erfindung werden bei einem Frequenzanalyseverfahren der eingangs genannten Art aus einem zeitlich in Form von Abtastwerten vorliegenden Eingangssignal mittels Fensterfunktionen überlappend aufeinanderfolgende Blöcke von Abtastwerten entnommen, worauf die so mit den Fensterfunktionen bewerteten Blöcke zur Erzeugung eines Satzes von Koeffizienten Fourier-transformiert werden, wobei aber jeweils ein solcher Block des Eingangssignales mit einem Satz von unterschiedlichen, symmetrischen Fensterfunktionen gleicher Länge zur Erzeugung eines Satzes von mit den jeweiligen Fensterfunktionen gewichteten Blöcken von Abtastwerten bewertet wird. Die Fourier-Transformierten der Fensterfunktionen besitzen, bedingt durch die unterschiedlichen Fensterfunktionen, auch unterschiedliche Bandbreiten.

Zu jedem der zeitgleich erzeugten Blöcke von gefensterten Abtastwerten läßt sich über eine eigene Fourier-Transformation mindestens ein Koeffizient berechnen, dem die Bandbreite der Fourier-Transformierten dieser Fensterfunktion zugeordnet ist, wobei die Koeffizienten so gewählt werden, daß die ihnen zugeordneten Frequenzbänder, bezogen auf ihre Bandbreite, sich nur geringfügig überlappen oder beabstandet sind. Mit anderen Worten schließen die den Koeffizienten zugeordneten Frequenzbänder im wesentlichen lückenlos und überdeckungsfrei aneinander an.

Ein bevorzugtes Ausführungsbeispiel des erfindungsgemäßen Frequenzanalyseverfahrens wird nachfolgend unter Bezugnahme auf die beiliegenden Zeichnungen näher erläutert. Es zeigen:

Fig. 1            eine Darstellung zur Verdeutlichung, daß die Erzeugung einer auf $F_g$ bandbegrenzten Funktion f(t) durch Überlagerung von mit dem jeweiligen Abtastwert bewerteten sinx/x-Funktionen möglich ist;

Fig. 2            den Zusammenhang zwischen der Frequenzgruppe $\Delta F_g$ in Abhängigkeit von der Mittenfrequenz $f_m$;

Fig. 3            den Zusammenhang zwischen einer Frequenzachse in Hertz als Ordinate und einer Frequenzachse in BARK als Abszisse;

Fig. 4 und 5    Frequenz- und Zeitdarstellungen zur Verdeutlichung des Ähnlichkeitssatzes der Fourier-Transformation zur Verdeutlichung, daß zu einer Verbreiterung der Bandbreite eines Spektralkoeffizienten eine Verschmälerung der Fensterfunktion im Zeitbereich nötig ist;

Fig. 6            ein Beispiel für eine Fourier-Transformierte einer Fensterfunktion, welche die Energieerhaltung gewährleistet;

Fig. 7            ein Beispiel für eine Fourier-Transformierte, die eine feinere Zeitauflösung, jedoch nur eine reduzierte Frequenzauflösung besitzt;

Fig. 8            ein Flußdiagramm eines BARK-Generators zur Ermittlung von Fensterfunktionen im Zeitbereich, die quenzgruppenbreite Spektralkoeffizienten erzeugen;

Fig. 9            eine Darstellung zur Beurteilung eines BARK-Generatorentwurfes;

Fig. 10          eine Darstellung des Iterationsergebnisses des BARK-Generators in Abhängigkeit von der Rasterweite;

Fig. 11          eine Darstellung des Quotienten aus der Anzahl unterschiedlicher Frequenzgruppen und der Gesamtzahl der Bänder in Abhängigkeit von der Rasterzahl;

Fig. 12          ein Blockdiagramm einer Vorrichtung zur Durchführung der BARK-Transformation auf der Grundlage einer 512-Punkte-FFT;

Fig. 13  ein rekursives Filter erster Ordnung zur Bildung des Goertzel-Algorithmus;

Fig. 14  ein rekursives Filter zweiter Ordnung zur Bildung eines Goertzel-Algorithmus zweiten Grades;

Fig. 15  eine transponierte Struktur eines Filters zur Bildung eines Goertzel-Algorithmus zweiten Grades;

Fig. 16  eine bevorzugte Ausführungsform eines rekursiven Filters zur Bildung des Goertzel-Algorithmus zweiten Grades als Vorrichtung zur Berechnung eines Koeffizienten der BARK-Transformation;

Fig. 17  eine Darstellung zum Vergleich des Rechenaufwandes für einen komplexen Spektralkoeffizienten bei Verwendung einer schnellen Fourier-Transformation gegenüber dem Goertzel-Algorithmus, aufgetragen über verschiedene Transformationslängen N;

Fig. 18  eine Darstellung der Anzahl GA der Goertzel-Algorithmen, die innerhalb des Rechenzeitbedarfs für eine schnell Fourier-Transformation auf einem Signalprozessor gerechnet werden können, aufgetragen über verschiedene Transformationslängen N;

Fig. 19  eine Darstellung des Frequenzganges als Summe der Amplitudenübertragunqsfunktionen; und

Fig. 20  eine Darstellung der Betragsübertragungsfunktion der Einzelfilter einer BARK-Transformation.

Transformationsverfahren lassen sich offensichtlich mit deutlich weniger Aufwand als Filterbänke realisieren. Auf der anderen Seite sind sie aber nur dann mit Erfolg einsetzbar, wenn auf der spektralen Achse (der Frequenzachse in Hertz) lediglich äquidistant angeordnete Repräsentanten benötigt werden. Eine nicht äquidistante Anordnung auf der spektralen Achse über eine Gruppierung herzustellen, führt zu einer Realisierung, die von vorne herein nicht gehörrichtig ist, weil sie nicht entlang der Heisenberg-Grenze arbeitet.

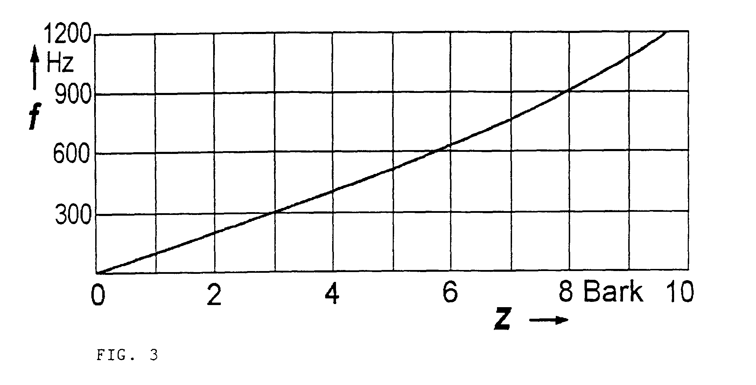

Der Zusammenhang zwischen einer Frequenzachse in Hertz und einer Frequenzachse in BARK ist aber - jedenfalls für niedrige Frequenzen - näherungsweise linear. Fig. 2 [Zwicker, E.; Feldtkeller, R.: Das Ohr als Nachrichtenempfänger, 2. Aufl., Hirzel Verlag, Stuttgart 1967] läßt dies bereits erkennen. Deutlicher wird der lineare Zusammenhang, wenn man die Frequenz in Hertz über der Tonheit in BARK aufträgt, wie Zwicker dies in Fig. 3 getan hat [Zwicker, E.; Feldtkeller, R.: Das Ohr als Nachrichtenempfänger, 2. Aufl., Hirzel Verlag, Suttgart 1967]. Dann ist erkennbar, daß der Zusammenhang zwischen einer Frequenzachse f in Hertz (Ordinate) und einer Frequenzachse z in BARK (Abszisse) zumindest im unteren Frequenzbereich bis etwa 5 BARK linear ist; das bedeutet, das hier die Teilbänder gleich breit sind. Im Bereich von 0 Hz bis etwa 500 Hz kann also in guter Näherung von einem linearen Zusammenhang gesprochen werden. In diesem Bereich läßt sich daher für jede Mittenfrequenz in etwa die gleiche Frequenzgruppenbreite von 100 Hz angeben. Hier wird zunächst eine Fourier-Transformation vom Zeitbereich in den Frequenzbereich eingesetzt. Sie kann hier ohne die übliche Gruppierung von Spektralwerten, d.h. mit einem idealen Produkt von Bandbreite und Zeitauflösung verwendet werden. Man gewinnt dabei den Vorteil, zumindest die ersten fünf Spektralkoeffizienten gemeinsam in einem Ablauf (z.B. in einer schnellen Diskreten Fourier-Transformation) berechnen zu können. Üblicherweise ergeben sich bei der Abbildung einer Frequenzachse von 0 Hz bis etwa 22 kHz auf eine BARK-Achse etwa 25 Spektrallinien. Sie können als Repräsentanten für die frequenzgruppenbreiten Bänder angesehen werden. Die Berechnung der ersten fünf Spektrallinien mittels einer Fourier-Transformation hat mit einer Schrittweite auf der Frequenzachse zu erfolgen, die der in diesem Bereich annähernd konstanten Frequenzgruppenbreite, also etwa 100 Hz, entspricht. Bei einer Abtastfrequenz von beispielsweise 48 kHz muß demnach mit einer 480-Punkte Fourier-Transformation gerechnet werden. Von den 240 Spektrallinien können dann schon die ersten 5 verwendet werden, die restlichen 235 Spektrallinien müssen verworfen werden, da sie zu höheren Frequenzen hin keine Frequenzgruppenbreite mehr repräsentieren (ihre Bandbreiten sind dafür zu schmal). Für den geforderten Entwurf entlang der Heisenberg-Grenze sind wegen der Reziprozität von Bandbreite und Zeitauflösung $B \cdot T = 0,5$ zur Erzielung breiterer Bänder entsprechend schmälere Fenster im Zeitbereich für weitere, getrennt zu berechnende Fourier-Transformationen zu wählen; diese ergeben dann - wie gewünscht - auch eine bessere Zeitauflösung.

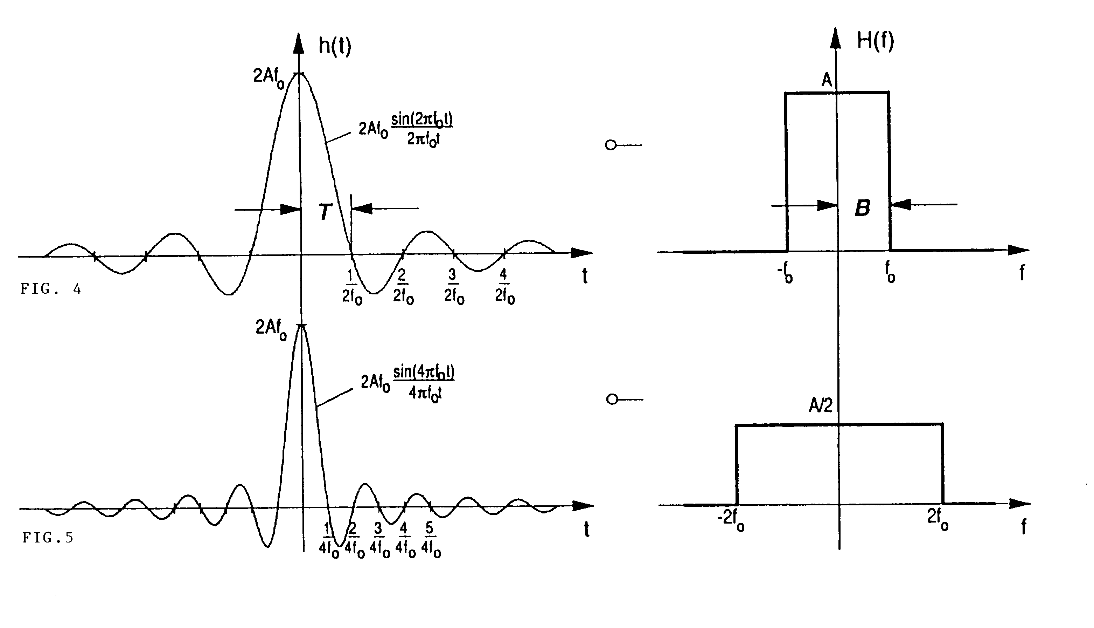

Der Ähnlichkeitssatz der Fourier-Transformation besagt, daß zu einer "Dehnung" der Bandbreite eines Spektralkoeffizienten eine "Stauchung" der Fensterfunktion im Zeitbereich nötig ist. Zeitauflösung T und Bandbreite B verhalten sich in reziproker Weise zueinander. Diese Reziprozität wird mittels der in Fig. 4 und Fig. 5 veranschaulichten Korrespondenzen der Fourier-Transformation gezeigt. Zur Erzielung einer höheren Bandbreite muß demnach die Fensterfunktion im Zeitbereich gestaucht werden; seine Zeitauflösung wird damit besser. Der dem erfindungsgemäßen Frequenzanalyseverfahren zugrunde liegende Gedanke ist es also, die Ordnung der Fourier-Transformation (die Anzahl der Koeffizienten) beizubehalten, gleichzeitig aber dafür zu sorgen, daß die höheren Spektrallinien Repräsentanten für breitere Bänder darstellen. Auf diese Weise erreicht man auch gleiche Steilheiten für die Filterflanken. Dies ist die Voraussetzung für ein konstantes Gesamtübertragungsverhalten für den Betragsfrequenzgang, das für den Einsatz in Meßverfahren insbesondere aber auch in Codierverfahren, gefordert werden muß.

Mit einer BARK-Transformation wird eine gehörgerechte Transformation vom Zeitbereich in den Frequenzbereich bezeichnet, wobei eine äquidistante Darstellung der Spektralkoeffizienten auf einer BARK-Achse (und nicht auf einer Hertz-Achse) erreicht wird. Die hier entwickelte BARK- Transformation unterscheidet sich von anderen (meist nur gehörangepaßten) Abbildungen auf die BARK-Achse dadurch, daß sie entlang der Heisenberg-Grenze und damit gehörrichtig arbeitet.

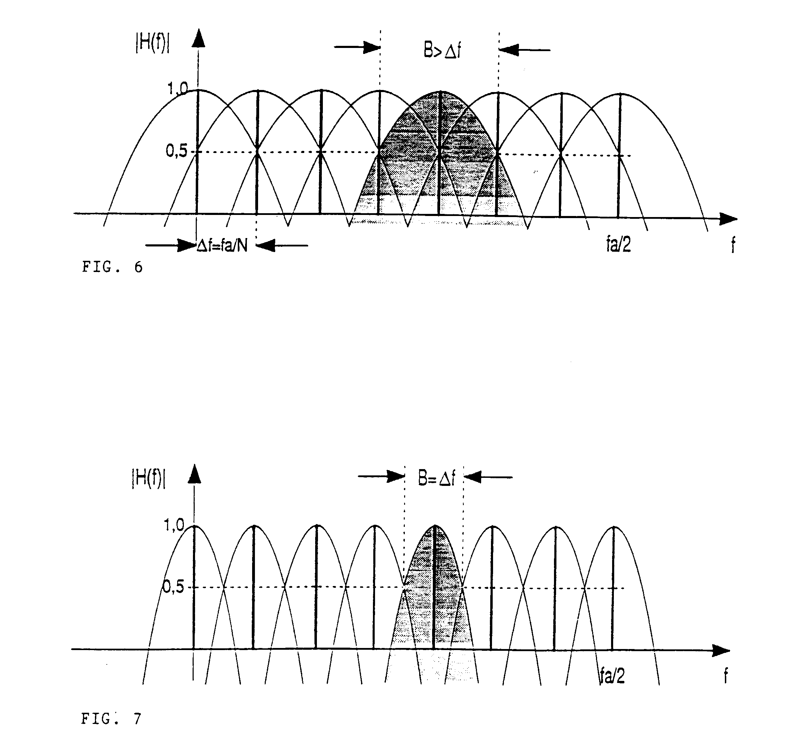

Eine Fourier-Transformation, die größere -6 dB-Bandbreiten liefert, als es dem Abstand $\Delta$ f der Spektrallinien entspricht, ist im herkömmlichen Sinne natürlich unbrauchbar (Fig. 6).

Normalerweise ist die Bandbreite Bn aller Spektralkoeffizienten der Fourier-Transformation durch die Ordnung N und die Abtastfrequenz $f_a$ vorgeschrieben: $B_n = f_a/N$. Die Betragsübertragungsfunktionen schneiden sich dann in IH(f)I = 0,5, d.h. an den -6 dB-Punkten (Fig. 7). Dennoch können von einer nach Fig. 6 modifizierten Fourier-Transformation nur die Linien für die BARK-Transformation verwendet werden, deren Bandbreiten bzw. Mittenfrequenzen in das von Zwicker für die Frequenzgruppenbreiten gegebene Schema passen. Durch die - zumindest innerhalb eines Rasters - freie Wahl der Bandbreite jedes Koeffizienten erübrigt sich eine Gruppierung von einigen Koeffizienten zu einer Frequenzgruppe mit all ihren Nachteilen, wie sie bei herkömmlichen gehörangepaßten Transformationsverfahren nötig ist. Weil das Frequenzraster für jede neu zu suchende Linie einer BARK-Transformation beibehalten wird, lassen sich nun Bänder aneinanderreihen, deren Breite in beliebig guter Näherung der angestrebten Abbildung auf die BARK-Achse entspricht. Ein Entwurf entlang der Heisenberg-Grenze ist dabei gewährleistet. Die Staffelung ist deshalb "lückenlos" möglich, weil Bandbreiten gewählt werden, die genau in das durch die Länge der Fourier-Transformation gegebene $\Delta$f-Raster passen. Die Summe aller Amplitudenübertragungsfunktionen bleibt dabei dennoch konstant: die Flankensteilheit der bei der Staffelung entstehenden Bandfilter ist nur von der Anzahl der Filterkoeffizienten (der Fensterlänge), nicht aber von der Bandbreite abhängig. Diese Anzahl ist aber konstant, sie entspricht normalerweise (d. h. ohne Polyphasenaddition) der Länge der Fourier-Transformation. Weil alle Flanken die gleiche Steilheit aufweisen, treten unerwünschte Schwankungen im Gesamtübertragungsverhalten (Summenfrequenzgang) hier nicht auf.

Die in Form von Abtastwerten vorliegenden Fensterfunktionen müssen nicht notwendigerweise die gleiche Anzahl von Abtastwerten aufweisen, die der Länge der auf die Fensterung folgenden Fourier-Transformation entspricht. Vielmehr kann durch eine Verlängerung der Fensterfunktion über die Transformationslänge hinaus eine Verbesserung der Flankensteilheit der Einzelfilter erreicht werden. Das Additionstheorem der Fourier-Transformation erlaubt es, auch längere Sequenzen als durch die Transformationslänge gegeben in den Frequenzbereich zu transformieren. Hierzu wird eine Anzahl von aufeinanderfolgenden Teilblöcken aus dem bereits gefensterten längeren Eingangsblock von Abtastwerten gebildet, nach dem Prinzip der Superposition addiert und gemeinsam in den Frequenzbereich transformiert. Dieses Prinzip ist auch als Polyphasen-Filterung bekannt [Chrochiere, R.E.; Rabiner L.: Multirate Digital Signal Processing, Prentice-Hall, Englewood Cliffs, New Jersey, 1983]. Durch die Polyphasen-filterung wird insbesondere die Zeitauflösung nicht berührt, da die dem Filterentwurf zugrunde liegende Spaltfunktion die gleiche bleibt.

Die Erfindung liefert ferner ein als BARK-Generator bezeichnetes Iterationsverfahren, das nunmehr erläutert wird. Die Staffelung der Bänder wird nach Vorgabe einiger Parameter einem Rechenautomaten überlassen. Diese Staffelung liefert für jede Frequenzgruppe einen Satz von Filterkoeffizienten für das Zeitfenster einer schnellen Fourier-Transformation. Es hat sich als günstig erwiesen, die Staffelung ab der halben Abtastfrequenz (d.h. der höchsten vorkommenden Signalfrequenz) zu tieferen Frequenzen hin und nicht umgekehrt vorzunehmen. (Eine Staffelung ab der niedrigsten im Signal vorkommenden Frequenz ist natürlich auch möglich). Die Staffelung gewährleistet nicht von vorne herein, daß am Ende die untere Grenzfrequenz der untersten Frequenzgruppe mit 0 Hz zusammenfällt. Brauchbar sind aber auch Iterationen, die untere Grenzfrequenzen für das unterste Band bis hinauf zu etwa 50 Hz liefern. Ein möglicherweise im Signal enthaltener, normalerweise unhörbarer Gleichanteil wird dadurch in die Messung stark gedämpft eingehen. Audiosignale reichen nicht bis zu einer Frequenz bis 0 Hertz hinab. Im Verlauf der Iteration werden also weitere Bänder unter die bereits ermittelten gestaffelt. Die Bandgrenzen der frequenzgruppenbreiten Bänder, aber auch deren Mittenfrequenzen fallen dabei auf ein vorzugebendes Raster.

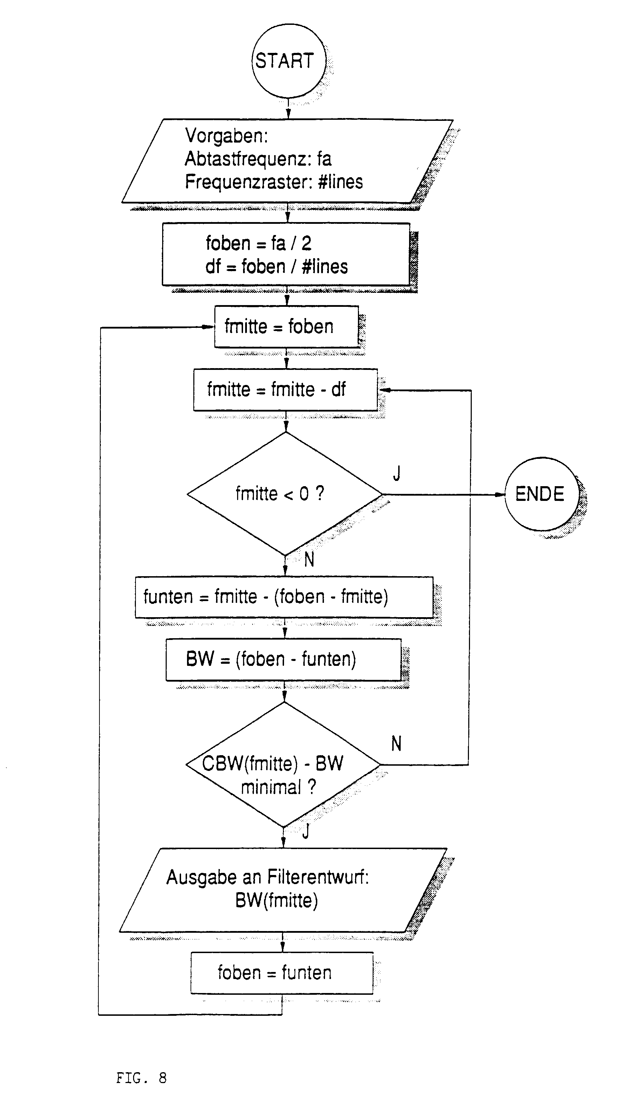

Bei der Suche nach den Koeffizientensätzen für weitere Fensterfunktionen wird nach dem in Fig. 8 dargestellten Flußdiagramm vorgegangen (CBW = Frequenzgruppenbreite nach Zwicker).

- Die obere Bandgrenze ist bekannt. Sie ergibt sich aus der unteren Bandgrenze des bereits als passend ermittelten Zeitfensters für die vorherige, höhere Frequenzgruppe, wobei 6dB-Bandbreiten zugrunde gelegt werden; bei Iterationsbeginn wird die obere Grenzfrequenz auf die halbe Abtastfrequenz als Startwert gesetzt.

- Die Mittenfrequenz des als nächstes zu suchenden Bandes wird nun solange auf dem Raster verschoben, das sich durch die Abtastfrequenz und die Ordnung der Fourier-Transformation ergibt, bis aus dem Ensemble von möglichen Bandbreiten eine gefunden wird, die der Frequenzgruppenbreite von Zwicker am nächsten kommt. Ist das verwendete Frequenzraster nur fein genug, so wird auch die Genauigkeit, mit der eine Frequenzgruppenbreite getroffen wird, beliebig gut sein.

- Aus der gefundenen Bandbreite ergibt sich der Koeffizientensatz für eine der Fensterfunktionen und damit die Zeitauflösung dieses Fensters gemäß der Heisenberg-Grenze, d.h. die Anforderung im Frequenzbereich bestimmt dabei den Verlauf der Fensterfunktion im Zeitbereich. Hier wird das Filterentwurfsverfahren nach Tietze, U.; Schenk, Ch.: Halbleiterschaltungstechnik, 9. Auflage, Springer-Verlag, Berlin, 1989, eingesetzt.

- Die untere Grenzfrequenz des gefundenen Bandes bildet die obere Grenzfrequenz des als nächstes zu ermittelnden Bandes. Wird im Verlauf der Iteration die Mittenfrequenz negativ, so ist das Abbruchkriterium erreicht.

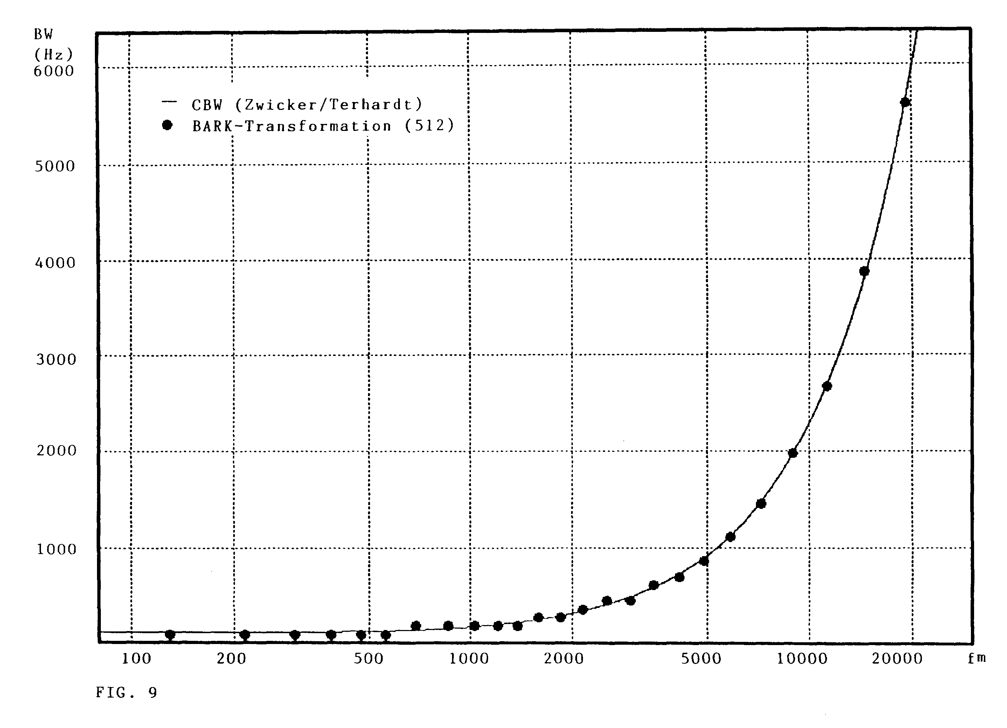

Es ist überraschend, daß bei der Untereinanderstaffelung der frequenzgruppenbreiten Bänder weit weniger als 25 unterschiedliche Zeitfenster nötig sind. Dies ist einerseits auf die nahezu konstante Frequenzgruppenbreite zu tiefen Frequenzen bis etwa 5 BARK zurückzuführen (vgl. Fig. 3); andererseits ist aber auch entscheidend, daß durch die Vorgabe eines Frequenzrasters eben nur diskrete Mittenfrequenzen bzw. Bandgrenzen erlaubt sind. Wie Fig. 9 zeigt, können bereits bei einer Diskretisierung auf 512 Frequenzen bis zur halben Abtastfrequenz die 25 frequenzgruppenbreiten Bänder ausreichend genau mit nur 14 verschiedenen Fensterfunktionen nachgebildet werden: Die Beurteilung des BARK-Generator-Entwurfs ist sofort graphisch am Bildschirm möglich. Die Abweichung der Bandbreiten von den Frequenzgruppenbreiten nach Zwicker ist bereits bei einem relativ groben Frequenzraster von 512 diskreten Frequenzen ausreichend klein (Beispiel in Fig. 9 für 44,1 kHz Abtastfrequenz).
Der BARK-Generator leistet die folgenden Aufgaben:

- Der Entwurf ist prinzipiell für jede Abtastfrequenz möglich, speziell aber für die gängigen Abtastfrequenzen 44,1 kHz, 48 kHz und 32 kHz; eine Abtastfrequenz von 44,1 kHz ist für Compact-Disc Musikmaterial üblich; Abtastfrequenzen von 32 kHz und 48 kHz findet man bei DAT-Medien (Digital Audio Tape).

- Untereinanderstaffelung von frequenzgruppenbreiten Bändern. Die Genauigkeit, mit der der Entwurf den Frequenzgruppenbreiten von Zwicker entspricht, läßt sich durch die Vorgabe eines Rasters steuern.

- Zu Versuchszwecken lassen sich auch Bandbreiten für die Teilfilter einstellen, die Bruchteilen von einem BARK entsprechen: dies eröffnet die Möglichkeit, das Tonhöhenauflösungsvermögen des menschlichen Ohres von etwa 1/27 BARK nachzubilden.

- Berechnung und Ausgabe der Sätze von Filterkoeffizienten für die benötigten Fenster unter Berücksichtigung der Polyphasenaddition in verschiedenen Ausgabeformaten. Eine der Ausgabemöglichkeiten ist eine Konstantentabelle, die sofort als Quelltext in ein Programm zur BARK-Transformation eingebunden werden kann. Die Bezeichnung BARK-Generator ist damit gerechtfertigt.

- Bandbreite und Zeitauflösung der Fensterfunktionen ergeben (ähnlich wie bei der trivialen Bandfilter-Kaskade) immer einen Entwurf entlang der Heisenberg-Grenze.

- Eine visuelle Beurteilung der Iterationsergebnisse ist sofort durch die eingebundene Graphikausgabe möglich. Eventuelle Modifikationen können interaktiv erfolgen.

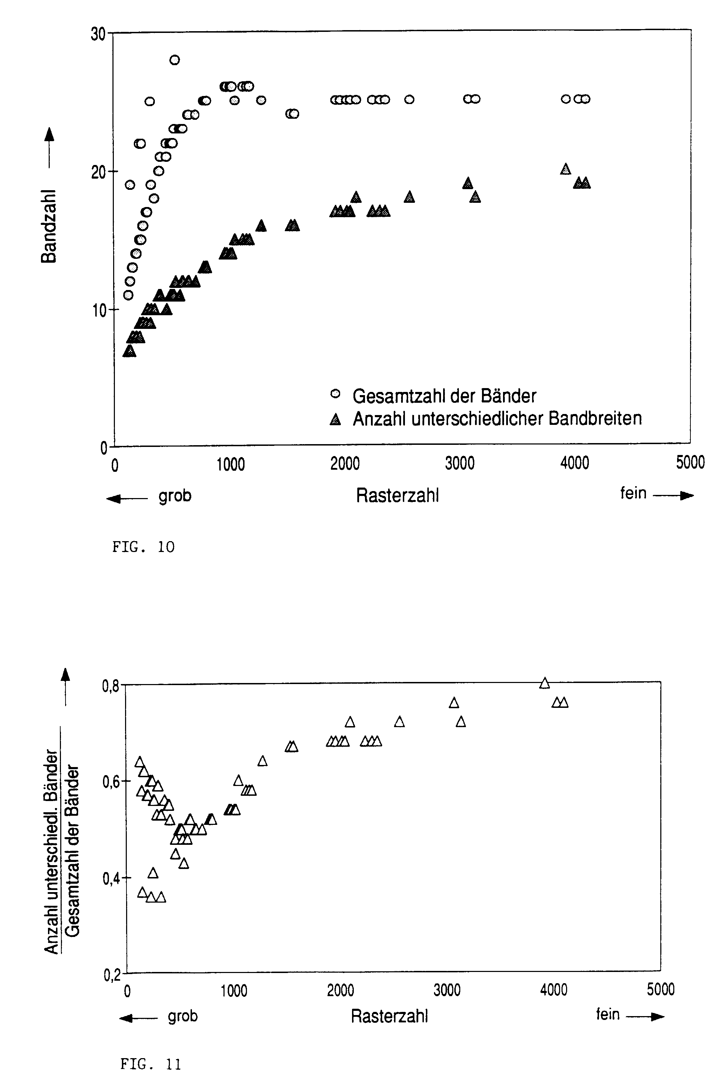

Wie Fig. 10 zeigt, läuft die Iteration nicht für beliebige Frequenzraster, sondern nur bei einigen ausgezeichneten Rasterweiten erfolgreich ab. Die Iteration kann immer dann als erfolgreich gelten, wenn die untere Grenzfrequenz des untersten Bandes im Bereich von etwa 0 bis 50 Hz liegt. Es ist günstig, einen im Signal möglicherweise enthaltenen Gleichanteil, der ja normalerweise unhörbar ist, auch in die Messung stark gedämpft eingehen zu lassen. Der Durchlassbereich der untersten Frequenzgruppe muß daher nicht unbedingt bis 0 Hz hinabreichen. Die Gesamtzahl der Bänder, in die der Frequenzbereich von z.B. 0 bis 22,05 kHz unterteilt wird, nähert sich mit zunehmender Rasterzahl (d.h. mit feiner werdendem Frequenzraster) der Frequenzgruppenzahl von 25. Diese Anzahl ist für die in diesem Beispiel gewählte Abtastfrequenz richtig.

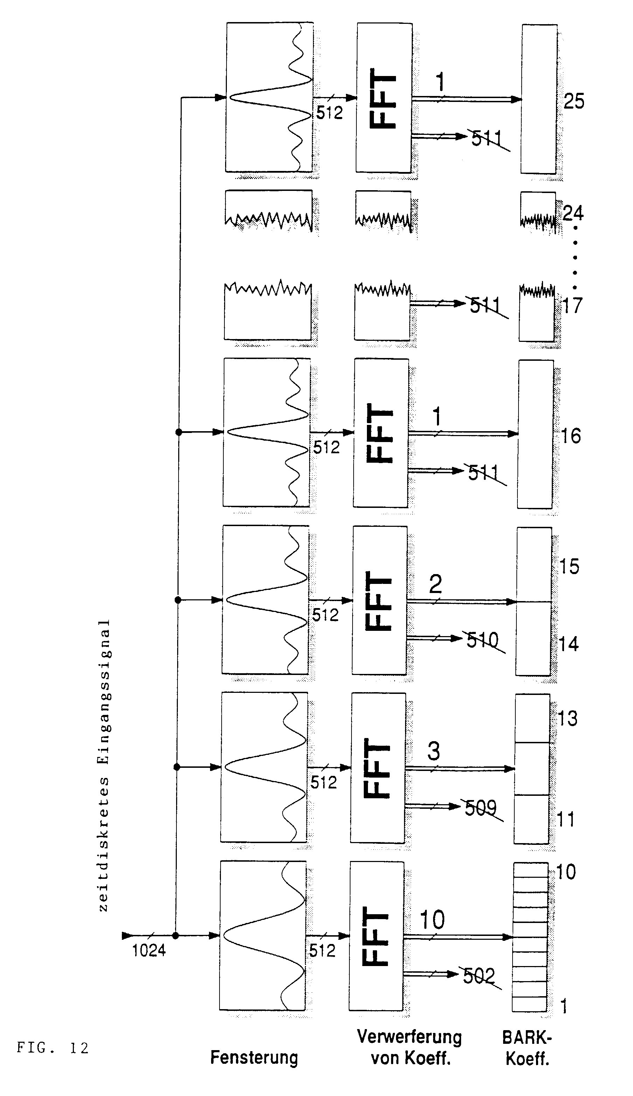

Fig. 10 zeigt auch, daß die Anzahl unterschiedlicher Fensterfunktionen dabei immer unterhalb der gesamten Anzahl von Frequenzgruppen bleibt. Hierin liegt ein wesentlicher Vorteil des BARK-Generators: Es sind - für alle praktisch relevanten Fälle - weniger Bewertungen des Eingangsvektors des Zeitsignals mit einer Fensterfunktion nötig als durch die Transformation frequenzgruppenbreite Bänder erzeugt werden. Bildet man den Quotienten aus der Anzahl unterschiedlicher Frequenzgruppen und der Anzahl der Bänder, so ergibt sich für eine Rasterzahl von etwa 512 ein Minimum (Fig. 11).

Hier arbeitet die BARK-Transformation am ökonomischsten: Im Verhältnis wird die geringste Anzahl unterschiedlicher Bänder benötigt. Noch kleinere Rasterzahlen sind zwar möglich, führen in diesem Beispiel aber zu Abweichungen von der Frequenzgruppenbreite nach Zwicker, die nicht mehr befriedigen.

Maßnahmen zur Reduktion des Rechenaufwandes

Der Rechenaufwand zur Ermittlung einer vollständigen BARK-Transformation ist noch relativ groß, da für jedes unterschiedliche Fenster eine neue Diskrete-Fourier-Transformation gerechnet werden muß. Diese Vorgehensweise geht mit einem meist nur begrenzt zur Verfügung stehenden Potential an Rechenleistung offensichtlich sehr unökonomisch um, da die meisten der berechneten Fourier-Koeffizienten verworfen werden; nur sehr wenige Koeffizienten (in vielen Fällen sogar nur ein einziger) werden für die BARK-Transformation weiterverwendet.

Wie in Fig. 12 angegeben, kann eine BARK-Transformation, deren Grundlage eine 512-Punkte FFT bildet, bereits mit nur 11 unterschiedlichen Teilfenstern berechnet werden. Bei der Berechnung der Koeffizienten für die 25 frequenzgruppenbreiten Teilfilter über eine schnelle Fourier-Transformation (FFT) müssen aber 99,56% aller FFT-Koeffizienten verworfen werden, nur 25 aus 5632 berechneten Koeffizienten werden tatsächlich verwendet.

Fig. 12 verdeutlicht die Verschwendung von Rechenkapazität in einem Beispiel mit 11 unterschiedlichen Fenstern und einer Rasterung auf 512 diskrete Frequenzen bis zur Abtastfrequenz: Für die untersten 10 Spektrallinien kann wegen des in diesem Frequenzbereich näherungsweise linearen Zusammenhangs zwischen Frequenzgruppenbreite und Mittenfrequenz noch ein und dasselbe Zeitfenster verwendet werden. Für die folgenden 3 Bänder (11 bis 13) wird ein neues Zeitfenster und damit eine neue gemeinsame FFT benötigt. Dies gilt auch noch für die darauffolgenden 2 Frequenzgruppen; erst ab der 16ten Frequenzgruppe aufwärts muß jeweils ein neues Zeitfenster pro Frequenzgruppe eingesetzt werden. Bei der ersten FFT werden dadurch 502 von 512 Koeffizienten verworfen, dann 509 von 512, 510 von 512 und schließlich 8 mal 511 von 512. Insgesamt werden von 11*512=5632 Koeffizienten nur 25 verwendet. Es müssen also 5607/25=224 mal mehr komplexe Fourier-Koeffizienten berechnet werden, als dann für die BARK-Transformation gebraucht werden. Wie in Fig. 12 jedenfalls beispielhaft skizziert wird, ergäbe die Berechnung der BARK-Transformation über eine Anzahl von schnellen Fourier-Transformationen mit jeweils unterschiedlichen Zeitfenstern einen unverhältnismäßig hohen Rechenaufwand, wenn nicht eine effizientere Methode zur Berechnung einzelner Koeffizienten als die schnelle Fourier-Transformation eingesetzt würde.

Eine triviale Möglichkeit, nur einen Koeffizienten einer Fourier-Transformation zu berechnen, besteht darin, die Bestimmungsgleichung für eine diskrete Fourier-Transformation anzuwenden. Mehr Vorteile bietet aber der Einsatz des Goertzel-Algorithmus zur Berechnung einzelner Linien [Goertzel, G.: An Algorithm for the Evaluation of Finite Trigonometric Series, Amer. Math. Monthly 65 (1968), S.34-35].

Ausgehend von der z-Transformation X(z) einer Sequenz x(n) von Abtastwerten der Länge N

$$X(z) = \sum_{n=0}^{N-1} x(n) \cdot z^n$$

ergibt sich die Diskrete Fourier-Transformation (DFT) mit

$$z = W^k = (e^{-j2\pi/N})^k = e^{-j2\pi k/N}.$$

Über k werden diskrete Frequenzen ausgewählt.

Mit der Substitution $z^n = W^{nk} = e^{-j2\pi nk/N}$ kann die DFT auch als Polynom angegeben werden. Beispielsweise ergibt sich für N = 4 ein Polynom dritter Ordnung

$$X(z) = x(3) \cdot z^3 + x(2) \cdot z^2 + x(1) \cdot z + x(0).$$

Über das Horner-Schema löst man die Multiplikationen mit Potenzen von z auf

$$X(z) = ((x(3) \cdot z + x(2)) \cdot z + x(1)) \cdot z + x(0).$$

Unter Einführung einer neuen Variablen y(n) kann daraus eine lineare Differenzengleichung angegeben werden

$$y(n) = z \cdot y(n-1) + x(N-n).$$

Anfangsbedingung ist hierbei y(0) = 0. Das gesuchte Ergebnis für die Fourier-Transformierte findet man für n = N

$$X(z) = y(N).$$

Die lineare Differenzengleichung kann auch als rekursives Filter erster Ordnung aufgefaßt werden. Die eingangs gemachte Substitution $z^n = W^{nk}$ wird hierzu wieder rückgängig gemacht.

$$y(n) = W^k \cdot y(n-1) + x(N-n); \; y(0) = 0$$

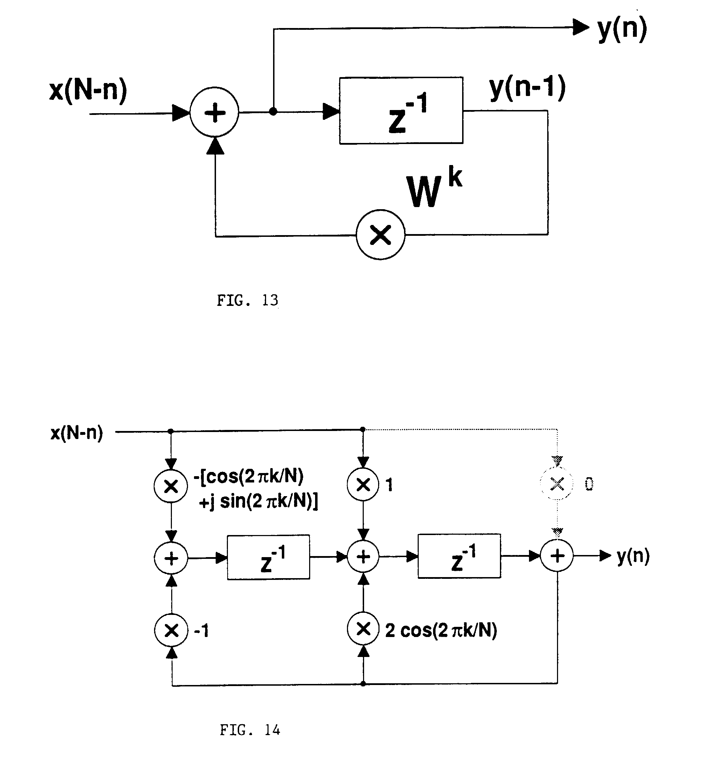

Die damit gegebene Anordnung ist in Fig. 13 wiedergegeben.

Die Eingangssequenz muß allerdings in umgekehrter Reihenfolge vorliegen.

Außerdem wirkt sich nachteilig auf die Stabilität und den Rechenaufwand für das Filter aus, daß die Zustandsvariable y(n-1) über einen komplexen Koeffizienten $W^k$ auf den Filtereingang zurückgeführt wird.

Die Anzahl der Multiplikationen und Additionen ist zwar die gleiche wie bei der direkten Berechnung der diskreten Fourier-Transformation, die Drehfaktoren müssen hier jedoch nicht explizit berechnet oder über eine Drehfaktortabelle ("twiddle table") zur Verfügung gestellt werden; durch die rekursive Berechnungsweise werden sie vielmehr in jedem Durchlauf, ausgehend von einem Anfangswert, für einen neu hinzukommenden Abtastwert der Eingangssequenz x(n) weitergedreht.

Die Anzahl der benötigten Multiplikationen läßt sich auf die Hälfte reduzieren, wenn man die Euler'sche Gleichung einsetzt

$$W^k = e^{-j2\pi k/N} = \cos(2\pi k/N) - j\sin(2\pi k/N)$$

und auf eine indizierte Notation übergeht

$$y_n = W^k y_{n-1} + x_{N-n}$$
$$= [\cos(2\pi k/N) - j\sin(2\pi k/N)] \cdot y_{n-1} + x_{N-n} \,,$$

wobei

$$y_{n-1} = [\cos(2\pi k/N) - j\sin(2\pi k/N)] \cdot y_{n-2} + x_{N-n+1} \,.$$

Nach einigen weiteren Umformungen ergibt sich schließlich für $y_n$

$$y_n - [2 \cdot \cos(2\pi k/N)] \cdot y_{n-1} + y_{n-2} = -x_{N-n} + [\cos(2\pi k/N) + j\sin(2\pi k/N)] \cdot x_{N+1-n} \,.$$

Durch Vergleich mit der allgemeinen Differenzengleichung zweiter Ordnung

$$y(k+2) + c_1 \cdot y(k+1) + c_0 \cdot y(k) = b_2 \cdot x(k+2) + b_1 \cdot x(k+1) + b_0 \cdot v(k)$$

können die Filterkoeffizienten für ein rekursives Filter zweiten Grades in der ersten kanonischen Grundform angegeben werden, das sich wie in Fig. 14 gezeigt, darstellen läßt.

$$c_1 = -2 \cdot \cos(2\pi k/N); \; c_0 = 1$$

$$b_2 = 0; \qquad b_1 = (2\pi k/N) + j\sin(2\pi k/N); \qquad b_0 = 1$$

In dieser Form besitzt die Gleichung reelle Koeffizienten für die Rückführung, allerdings einen komplexen Eingangskoeffizienten.

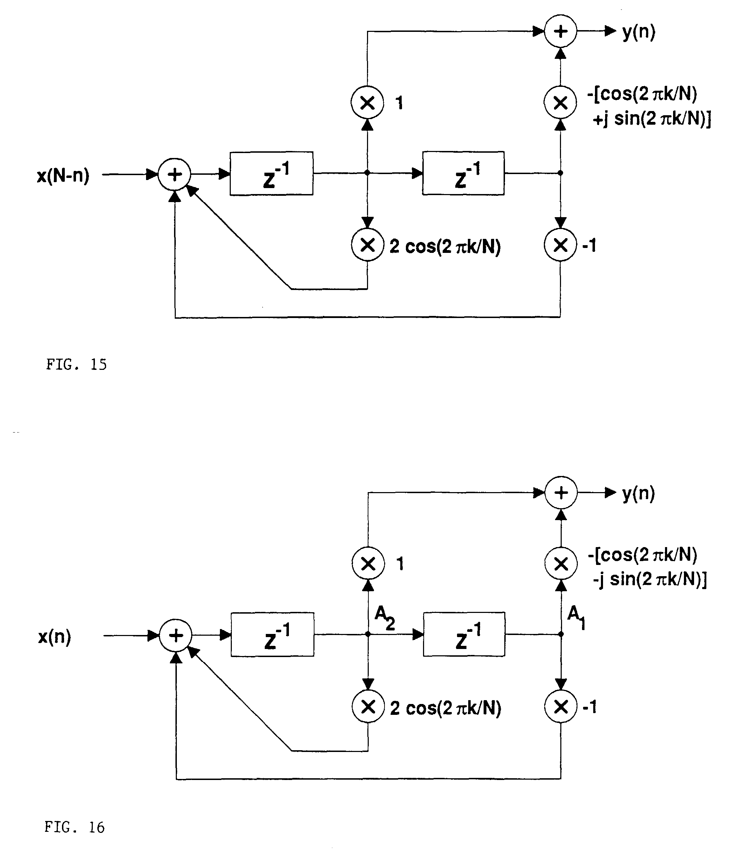

Das rekursive Filter zweiten Grades in der zweiten kanonischen Struktur kann - wie in Fig. 15 gezeigt - noch transponiert werden.

Da die Eingangsfolge rein reell ist, aber in umgekehrter Reihenfolge am Eingang anliegt, gilt für den ungeraden Anteil der Eingangsfolge

$$h_u(t) = - h(t)$$

Der ungerade Anteil $h_u(t)$ liefert aber nur den ungeraden Imaginärteil der Fourier-Transformation; speist man die Eingangsfolge in nicht umgekehrter Reihenfolge ein, muß der Imaginärteil der Fourier-Transformierten lediglich negiert werden.

Fig. 16 zeigt die endgültige Version des Goertzel-Algorithmus. Die Eingangsfolge x(n) liegt jetzt in normaler Reihenfolge am Eingang an. Der Ausgangswert muß erst bestimmt werden, wenn der Eingangsvektor x(n) vollständig abgearbeitet ist. Zur Berechnung einer Spektrallinie ist es vorteilhaft, zunächst alle Werte der Eingangsfolge x(n) in das Filter "hineinlaufen" zu lassen und erst dann den Ausgangswert y(n) über eine komplexe Multiplikation aus den Zustandsvariablen $A_1$ und $A_2$ zu berechnen.

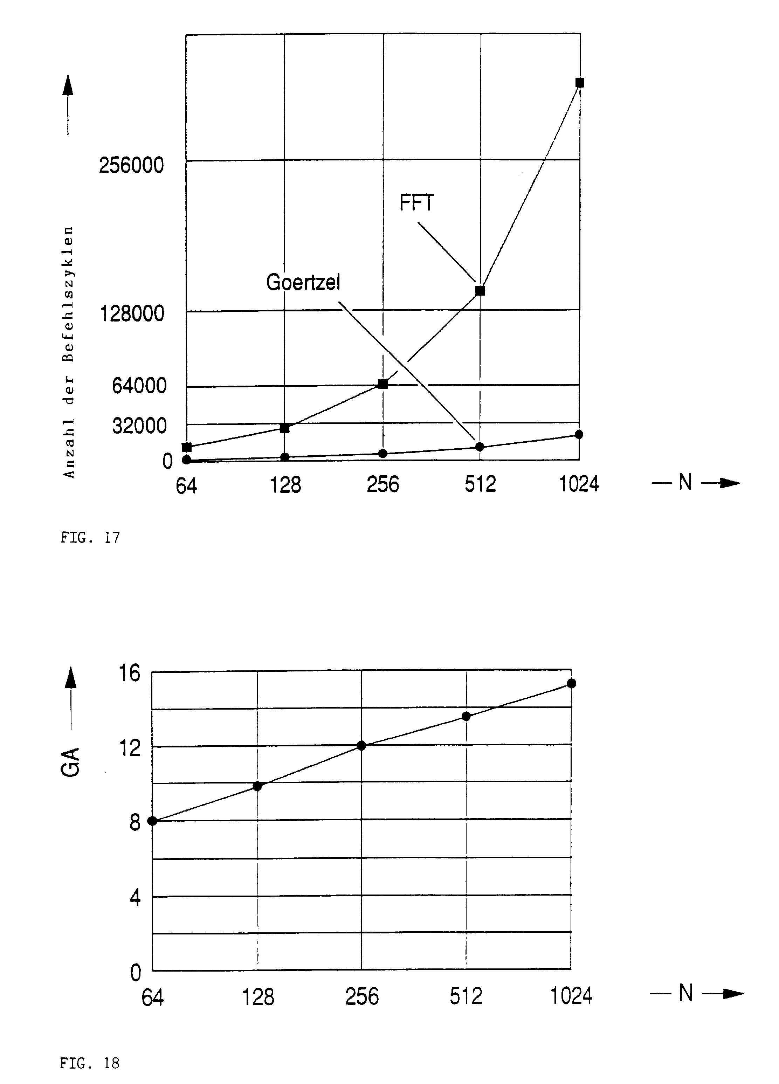

Mit diesem wenig bekannten Algorithmus ist es also möglich, einzelne Linien einer diskreten Fourier-Transformation zu berechnen; die dabei verwendete Struktur läßt sich auch als rekursives Filter auffassen. Ein besonderer Vorteil gegenüber der FFT ist, daß hier keine Drehfaktortabelle benötigt wird. Außerdem treten innerhalb des Filters lediglich rein reelle Additionen und Multiplikationen auf. Nur am Filterausgang wird eine komplexe Multiplikation benötigt; zur Berechnung eines BARK-Koeffizienten muß diese außerdem nur einmal berechnet werden. Der Aufwand zur Berechnung eines Koeffizienten über den Goertzel-Algorithmus ist in der praktischen Realisierung auf einem modernen Einchip-Signalprozessor TMS320C30 geringer als der für eine komplette FFT. (Fig. 17 zeigt den Rechenaufwand für verschiedene Transformationslängen N).

Fig. 18 zeigt dazu, daß innerhalb der Rechenzeit, die eine schnelle Fourier-Transformation benötigt, in vielen Fällen sogar einige Goertzel-Algorithmen gerechnet werden können. Wie aus beiden Fig. 17 und 18 hervorgeht, ist es beispielsweise bei einer Transformationslänge von N = 512 günstiger, bis zu 13 Spektralkoeffizienten über den Goertzel-Algorithmus einzeln zu berechnen, als über eine schnelle Fourier-Transformation. Bei der Anwendung des Goertzel-Algorithmus in der BARK-Transformation gewinnt man daher einen ganz beträchtlichen Geschwindigkeitsvorteil. Der Rechenaufwand für das in Fig. 12 angegebene Beispiel reduziert sich dadurch enorm; in den meisten Fällen braucht sogar nur ein Spektralkoeffizient berechnet zu werden. Die Berechnung einer schnellen Fourier-Transformation über eine Koeffizientenanzahl, die nicht einer Potenz von 2 entspricht, ist zwar möglich, führt aber im allgemeinen zu einem unverhältnismäßig höheren Aufwand aufgrund der komplizierteren Struktur der dabei einzusetzenden Verfahren.

Ein weiterer Vorteil des Goertzel-Algorithmus besteht demgegenüber darin, daß beliebige Frequenzrasterungen über dasselbe Verfahren (d.h. über das gleiche Programm) gerechnet werden können. Dazu ist lediglich die Länge des Eingangsvektors und der Winkel $2\pi k/N$ gemäß der zu berechnenden Linie k neu vorzugeben. Obwohl der Goertzel-Algorithmus als rekursives Filter am Stabilitätsrand arbeitet, treten dennoch keine Stabilitätsprobleme (z.B. Überlauf des Rechenwerks) auf, da der Algorithmus nach der Berechnung eines jeden Koeffizienten der BARK-Transformation wieder neu aufgesetzt wird.

Für die BARK-Transformation ergibt sich somit gegenüber dem in Fig. 12 gegebenen Beispiel ein weitaus (um den Faktor 224) geringerer Gesamtaufwand zur Ermittlung des gehörrichtigen Kurzzeitspektrums: 25 Goertzel-Algorithmen zur Berechnung der komplexen BARK-Koeffizienten der 25 Teilbänder und 11 Polyphasenfenster zur Einstellung der 11 verschiedenen Bandbreiten.

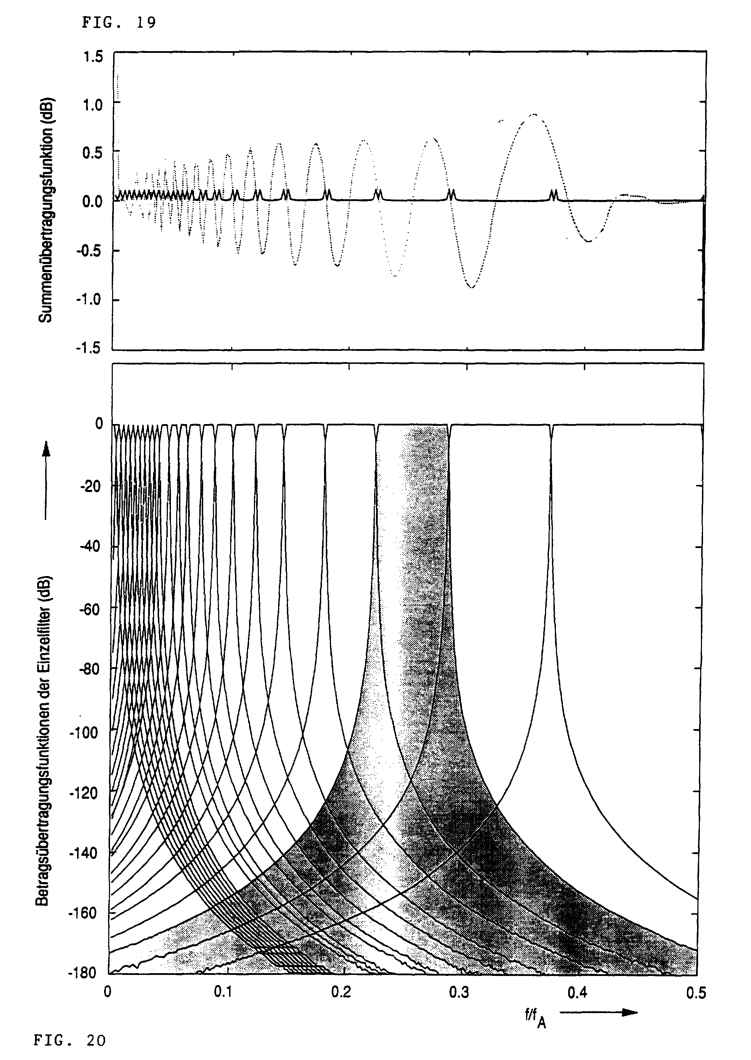

Beide Teilalgorithmen erfordern im Kern ausschließlich Multiplikations-Additions-Operationen und sind daher für eine Ausführung auf einem Signalprozessor prädestiniert. Die konsequente Anwendung des Prinzips der Reziprozität und die Polyphasen-Filterung führen zu den in Fig. 20 für eine Abtastfrequenz von $f_a$ = 44,1 kHz angegebenen Betragsübertragungsfunktionen der Einzelfilter einer BARK-Transformation, aufgetragen über einer linearen Frequenzachse normiert auf die Abtastfrequenz von $f_a$ = 44,1 kHz. Die BARK-Transformation weist ein konstantes Übertragungsverhalten im Durchlassbereich, eine ausgezeichnete Sperrdämpfung und eine hervorragende Weitabselektion (keine Nebenmaxima) auf.

In Fig. 19 ist der Frequenzgang der Summe der Amplitudenübertragungsfunktionen angegebender BARK-Filterkaskade angegeben.

Besonderheiten der BARK-Transformation

Die BARK-Transformation besitzt in der hier vorgestellten Form viele ideale Eigenschaften. Die Nachteile herkömmlicher Frequenzzerlegungen über Transformations- und Teilbandverfahren können damit überwunden werden. Die Hauptvorteile der BARK-Transformation sind:

- Gehörrichtige Frequenzauflösung: Die BARK-Transformation folgt dem von Zwicker ermittelten Zusammenhang für die Frequenzgruppenbreite an der jeweiligen Mittenfrequenz. Der Fehler, der durch die Vorgabe eines Frequenzrasters bei der iterativen Ermittlung der Grenzfrequenzen der frequenzgruppenbreiten Teilbänder entsteht, kann beliebig klein gehalten werden, wenn nur das Raster fein genug ist.

- Feinstmögliche Zeitauflösung: Die Impulsantwort eines (Band-)Filters kann als Fensterfunktion für eine Transformation aufgefaßt werden. Die Transformationskoeffizienten stellen im Frequenzbereich Repräsentanten für die (Fourier-)Transformierten des Fensters im Zeitbereich dar. Deshalb muß sich bei der Variation der "Bandbreite eines Koeffizienten" auch die Auflösung im Zeitbereich ändern. Bei der BARK-Transformation ist daher für jede Frequenzgruppe das Produkt aus der Bandbreite B und der Zeitauflösung T konstant und gleichzeitig minimal: $B \cdot T = 0{,}5$. Diese Grenze, die als Heisenberg-Grenze bezeichnet wird, kann von keiner anderen Frequenzanalyse unterschritten werden. Der Filterentwurf entlang der Heisenberg-Hyperbel gewährleistet, daß weder die Zeitauflösung noch die Bandbreite der Teilbänder durch die BARK-Transformation verschlechtert wird.

- Linearphasige Teilfilter: Aufgrund der Linearphasigkeit der Teilfilter und den gezeigten idealen Eigenschaften der aus der Iteration resultierenden Betragsübertragungsfunktionen kann die BARK-Transformation in dieser Form als bestens geeignet zur Nachbildung der Gehöreigenschaft angesehen werden, Frequenzgruppen zu bilden. Die linearphasigen Teilfilter erfordern keine Laufzeitentzerrung durch Allpässe. Da überdies die Filterlängen für alle Teilfilter gleich sind, erübrigen sich auch Laufzeitanpassungen durch Verzögerungsglieder.

- Rechteckförmige Teilbänder: Der iterative Filterentwurf über die Fenstermethode kann interaktiv an einem Rechner erfolgen. Der Entwurf gewährleistet - trotz der Beschneidung der Spaltfunktion auf eine endliche Länge - Betragsübertragungsfunktionen für die frequenzgruppenbreiten Teilbänder, die sich durch einen konstanten Durchlassbereich und eine gute Weitabselektion wegen der fehlenden Nebenmaxima auszeichnen. Außerdem wird ein nahezu konstantes Übertragungsverhalten der gesamten Filterbank erreicht. Zu den ausgezeichneten Eigenschaften, vor allem der hohen Flankensteilheit bei relativ geringem Realisierungsaufwand gegenüber einzelnen Bandfiltern, trägt nicht zuletzt die Polyphasen-Filterung bei.

- Ökonomische Realisierung: Bei der Realisierung wird ausgenutzt, daß die Frequenzgruppenbreiten im unteren Frequenzbereich nahezu konstant sind. Es muß daher mit weit weniger Fensterfunktionen im Zeitbereich multipliziert werden, als Teilbänder nach der Transformation entstehen.

Die mit der BARK-Transformation gefundene Frequenzanalyse über nahezu rechteckförmige Teilbänder bildet den idealen Ausgangspunkt für die weitere Entwicklung eines gehörrichtigen Meßverfahrens einerseits und gehörangepaßter Codierverfahren andererseits. Das Transformationsverfahren läßt sich darüber hinaus auch auf andere Anwendungen übertragen, bei denen einen Transformation äquidistanter Abtastwerte vom Zeitbereich in den Spektralbereich benötigt wird, wobei die Spektralkoeffizienten auf der Frequenzachse nicht-äquidistant angeordnet sind und dennoch die Heisenberg-Bedingung erfüllt bleiben soll.

**Patentansprüche**

1. Frequenzanalyseverfahren

   bei dem aus einem zeitdiskret in Form von Abtastwerten vorliegenden Eingangssignal mittels Fensterfunktionen überlappend aufeinanderfolgende Blöcke von Abtastwerten entnommen werden, worauf die so mit den Fensterfunktionen bewerteten Blöcke zur Erzeugung eines Satzes von Koeffizienten Fourier-transformiert werden,

indem jeweils ein solcher Block des Eingangssignals mit einem Satz von unterschiedlichen, symmetrischen Fensterfunktionen gleicher Länge bewertet wird, um einen Satz von mit den jeweiligen Fensterfunktionen gewichteten Blöcken von Abtastwerten zu erzeugen, wobei sich die Fensterfunktionen durch die unterschiedlichen Bandbreiten ihrer Fourier-Transformierten voneinander unterscheiden, und

indem jeder der zeitgleich erzeugten Blöcke von gefensterten Abtastwerten eines Satzes einer eigenen Fourier-Transformation derart unterworfen wird,

dadurch gekennzeichnet, daß

-   zu jedem der zeitgleich erzeugten Blöcke wenigstens ein Koeffizient berechnet wird, dem die Bandbreite der Fourier-Transformierten dieser Fensterfunktion zugeordnet ist, und

-   daß die Koeffizienten so gewählt werden, daß die ihnen zugeordneten Frequenzbänder sich, bezogen auf ihre Bandbreite, nur geringfügig überlappen oder nur geringfügig voneinander beabstandet sind.

2.  Verfahren nach Anspruch 1, dadurch gekennzeichnet,

daß die Fensterfunktionen sinx/x-Funktionen sind, deren Nulldurchgänge in Abtastzeitpunkte von Abtastwerten gelegt sind, so daß sich eine Zeitauflösung entsprechend dem gegenseitigen Abstand der Nulldurchgänge ergibt, wobei die Zeitauflösung umgekehrt proportional zur doppelten Bandbreite der Fourier-Transformierten ist.

3.  Frequenzanalyseverfahren nach Anspruch 2, dadurch gekennzeichnet,

daß die Fourier-Transformation eine diskrete Schnelle Fourier-Transformation (FFT) ist, die eine der Anzahl von Eingangswerten im Zeitbereich entsprechende Anzahl von Koeffizienten im Frequenzbereich liefert, deren Abstand auf der Frequenzachse der Abtastfrequenz geteilt durch die Länge der Transformation entspricht und deren Bandbreite durch die Fensterfunktion vorgegeben ist, und

daß aus diesen Koeffizienten nur solche selektiert werden, mit denen zusammen mit zeitparallel aus dem Satz aus weiteren Schnellen Fourier-Transformationen auf demselben Block von Abtastwerten mit unterschiedlichen Fensterfunktionen zeitparallel zur Verfügung stehenden Koeffizienten bei anderen Mittenfrequenzen sich eine Kaskade von Bandfiltern aufbauen läßt, so daß die sich ergebenden Frequenzbänder im wesentlichen lückenlos aneinander angrenzen.

4.  Frequenzanalyseverfahren nach Anspruch 2, dadurch gekennzeichnet,

daß zur Verbesserung der Selektionseigenschaften der so entstehenden Kaskade von Bandfiltern die Länge der unterschiedlichen Fensterfunktionen eines Satzes auch ein Vielfaches der Transformationslänge betragen kann,

wobei vor der Transformation die Vielfachheit von Eingangswerten durch Aufteilung und additive Überlagerung (Superposition) der bereits gefensterten Eingangswerte wieder auf die Transformationslänge reduziert wird (Polyphasenaddition).

5.  Frequenzanalyseverfahren nach Anspruch 2, dadurch gekennzeichnet,

daß die selektierten Koeffizienten aus dem Eingangssignal mittels eines Goertzel-Algorithmus zweiter Ordnung berechnet werden.

6.  Frequenzanalyseverfahren nach einem der Ansprüche 1 bis 5, gekennzeichnet durch

ein iteratives Verfahren zur Bestimmung der diskreten Mittenfrequenzen und Bandgrenzen zur Festlegung der Fensterfunktionen, welches folgende Schritte umfaßt:

-   Setzen einer Lauffrequenzvariablen ($f_{mitte}$) auf eine Startfrequenz ($f_{oben}$), die auf dem durch die Länge der Fourier-Transformation gewählten Frequenzraster liegt;

- Verschieben der Lauffrequenzvariablen ($f_{mitte}$) auf dem Frequenzraster um einen Schritt (df);

- Ermittlung der sich aufgrund einer gegebenen, nicht linearen Funktion der Mittenfrequenz ergebenden Bandbreite; und

- Wiederholung der Iteration solange, bis eine Bandgrenze des zu der Lauffrequenzvariablen ($f_{mitte}$) gehörenden Bandes mit einer Bandgrenze eines vorher ermittelten Bandes zusammenfällt

7. Frequenzanalyseverfahren nach Anspruch 6, dadurch gekennzeichnet,

daß die gegebene, nichtlineare Funktion der Zusammenhang zwischen der Mittenfrequenz und der Frequenzgruppenbreite ist.

## Claims

1. Frequency analysis method

   in which window functions are used to extract overlappingly succeeding blocks of sampled values from an input signal present in a time-discrete fashion in the form of sampled values, whereupon the blocks thus evaluated using the window functions are subjected to Fourier transformation for the purpose of generating a set of coefficients,

   wherein such a block of the input signal is respectively evaluated using a set of different, symmetrical window functions of identical length to generate a set of blocks of sampled values weighted with the respective window functions, the window functions differing from one another in such a way that their Fourier transforms have different bandwidths, and

   characterized that each of the simultaneously generated blocks of windowed sampled values of a set is subjected to a dedicated Fourier transformation in such a way that

   - for each of the simultaneously generated blocks at least one coefficient is calculated which is assigned the bandwidth of the Fourier transforms of this window function, and

   - that the coefficients are chosen such that with reference to their bandwidth the frequency bands bands assigned to them overlap one another only slightly or are separated from one another only slightly.

2. Method according to Claim 1, characterized in that

   the window functions are sinx/x functions whose zero crossings are situated at sampling instants of sampled values, resulting in a temporal resolution corresponding to the mutual spacing of the zero crossings, the temporal resolution being inversely proportional to twice the bandwidth of the Fourier transforms.

3. Frequency analysis method according to Claim 2, characterized in that

   the Fourier transformation is a discrete fast Fourier transformation (FFT) which delivers in the frequency range a number of coefficients corresponding to the number of input values in the temporal range and whose distance on the frequency axis corresponds to the sampling frequency divided by the length of the transformation and whose bandwidth is prescribed by the window function, and

   in that of these only those coefficients are selected by means of which it is possible, in conjunction with coefficients available in a time-parallel fashion from the set of further fast Fourier transformations on the same block of sampled values using different window functions, to construct a cascade of band filters in the case of other centre frequencies, so that the resulting frequency bands adjoin one another essentially without gaps.

4. Frequency analysis method according to Claim 2, characterized in that

   in order to improve the selection properties of the cascade of band filters thus produced, the length of the different window functions of a set can also be a multiple of the transformation length,

it being the case that before the transformation the multiplicity of input values is reduced again to the transformation length by division and additive superposition of the already windowed input values (polyphase addition).

5. Frequency analysis method according to Claim 2, characterized in that

the selected coefficients are calculated from the input signal by means of a second order Goertzel algorithm.

6. Frequency analysis method according to one of Claims 1 to 5, characterized by

an iterative method for determining the discrete centre frequencies and band limits for the purpose of defining the window functions, which method comprises the following steps:

- setting a running frequency variable ($f_{centre}$) to a start frequency ($f_{top}$) which lies on the frequency raster chosen by the length of the Fourier transformation;

- displacing the running frequency variable ($f_{centre}$) by one step (df) on the frequency raster;

- determining the bandwidth resulting from a given, nonlinear function of the centre frequency; and

- repeating the iteration until a band limit of the band belonging to the running frequency variable ($f_{centre}$) coincides with a band limit of a previously determined band.

7. Frequency analysis method according to Claim 6, characterized in that

the given, nonlinear function is the relationship between the centre frequency and the frequency group width.

**Revendications**

1. Procédé d'analyse de fréquences

◆ dans lequel des blocs, qui se suivent en se recouvrant, de valeurs détectées sont prélevés au moyen de fonctions de fenêtre à partir d'un signal d'entrée présent sous forme de valeurs détectées de façon discrète dans le temps, à la suite de quoi les blocs ainsi évalués au moyen des fonctions de fenêtre sont soumis à une transformation de Fourier pour engendrer un jeu de coefficients,

◆ dans lequel un tel bloc respectif du signal d'entrée est évalué au moyen d'un ensemble de fonctions symétriques différentes de fenêtre de même longueur afin d'engendrer un jeu de blocs de valeurs détectées pondérés au moyen des fonctions respectives de fenêtre, les fonctions de fenêtre se différenciant l'une de l'autre par les largeurs différentes de bandes de leurs transformées de Fourier, et

◆ dans lequel chacun des blocs engendrés simultanément de valeurs détectées fenêtrées d'un ensemble est soumis à une transformation de Fourier propre,

caractérisé en ce que

◆ au moins un coefficient auquel est associé la largeur de bande de la transformée de Fourier de cette fonction de fenêtre est calculé pour chacun des blocs engendrés simultanément, et en ce que

◆ les coefficients sont sélectionnés d'une manière telle que les bandes de fréquence qui leurs sont associées ne se recouvrent que légèrement ou sont légèrement espacées les unes des autres, en ce qui concerne leur largeur de bande.

2. Procédé selon la revendication 1, caractérisé en ce que

◆ les fonctions de fenêtre sont des fonctions sinx/x dont les passages par zéro sont placés à des instants de détection de valeurs détectées, de sorte qu'il en résulte une résolution temporelle qui correspond à la distance réciproque des passages par zéro, la résolution temporelle étant inversement proportionnelle au double de la largeur de bande de la transformée de Fourier.

3. Procédé d'analyse de fréquence selon la revendication 2, caractérisé

- ◆ en ce que la transformation de Fourier est une transformation rapide de Fourier (FFT) discrète qui fournit dans le domaine des fréquences un nombre de coefficients qui correspond au nombre des valeurs d'entrée dans le domaine des temps, coefficients dont la distance sur l'axe des fréquences correspond à la fréquence de détection divisée par la longueur de la transformation et dont la largeur de bande est prédéfinie par la fonction de fenêtre, et
- ◆ en ce que parmi ces coefficients, seuls sont sélectionnés ceux au moyen desquels peut être constituée à d'autres fréquences moyennes une cascade de filtres de bande à coefficients disponibles parallèlement dans le temps au moyen d'autres transformations rapides de Fourier du même ensemble sur le même bloc de valeurs détectées au moyen de fonctions différentes de fenêtres parallèlement dans le temps, de sorte que les bandes de fréquence qui en résultent sont adjacentes l'une à l'autre sensiblement sans lacunes.

4. Procédé d'analyse de fréquences selon la revendication 2, caractérisé en ce que

- ◆ la longueur des différentes fonctions de fenêtre d'un ensemble peut également être égale à un multiple de la longueur de transformation afin d'améliorer les propriétés de sélection de la cascade ainsi produite de filtres de bande,
- ◆ la série des valeurs d'entrée étant de nouveau réduite avant transformation à la longueur de transformation (addition polyphasée) par division et superposition additive (superposition) des valeurs d'entrée déjà fenêtrées.

5. Procédé d'analyse de fréquence selon la revendication 2, caractérisé en ce que

- ◆ les coefficients sélectionnés dans le signal d'entrée sont calculés au moyen d'un algorithme de Goertzel de deuxième ordre.

6. Procédé d'analyse de fréquence selon l'une des revendications 1 à 5, caractérisé par

- ◆ un procédé itératif destiné à déterminer les fréquences moyennes discrètes et limites de bandes pour fixer les fonctions de fenêtre et comprenant les étapes consistant à :

  - établir une variable de fréquence courante ($f_{mitte}$) à une fréquence de départ ($f_{oben}$) qui est située sur le réseau de fréquences sélectionné par la longueur de la transformation de Fourier;
  - décaler d'une étape (df) la fréquence variable courante ($f_{mitte}$) sur le réseau de fréquences ;
  - déterminer la largeur de bande résultante sur la base d'une fonction donnée, non linéaire, de la fréquence moyenne; et
  - répéter l'itération jusqu'à ce qu'une limite de bande de la bande associée à la variable de fréquence courante ($f_{mitte}$) coïncide avec une limite de bande d'une bande déterminée précédemment.

7. Procédé d'analyse de fréquences selon la revendication 6, caractérisé en ce que

- ◆ la fonction données, non linéaire, est la relation entre la fréquence moyenne et la largeur du groupe de fréquences.

FIG. 1

FIG. 2

FIG. 3

EP 0 624 866 B1

$h(t)$

$2Af_0$

$2Af_0 \dfrac{\sin(2\pi f_0 t)}{2\pi f_0 t}$

$T$

$\dfrac{1}{2f_0}$  $\dfrac{2}{2f_0}$  $\dfrac{3}{2f_0}$  $\dfrac{4}{2f_0}$

$t$

FIG. 4

$H(f)$

$A$

$B$

$-f_0$  $f_0$  $f$

$2Af_0$

$2Af_0 \dfrac{\sin(4\pi f_0 t)}{4\pi f_0 t}$

$\dfrac{1}{4f_0}$  $\dfrac{2}{4f_0}$  $\dfrac{3}{4f_0}$  $\dfrac{4}{4f_0}$  $\dfrac{5}{4f_0}$

$t$

FIG.5

$A/2$

$-2f_0$  $2f_0$  $f$

17

$|H(f)|$

$B > \Delta f$

1,0

0,5

$\Delta f = fa/N$

$fa/2$

$f$

FIG. 6

$|H(f)|$

$B = \Delta f$

1,0

0,5

$fa/2$

$f$

FIG. 7

FIG. 8

FIG. 9

FIG. 10

FIG. 11

FIG. 12

Fensterung     Verwerferung von Koeff.     BARK-Koeff.

FIG. 13

FIG. 14

FIG. 15

FIG. 16

24

FIG. 17

FIG. 18

FIG. 19

FIG. 20